# EUROPEAN PATENT SPECIFICATION

(11) **EP 3 430 512 B1**
(45) Date of publication and mention of the grant of the patent: **18.08.2021**
(21) Application number: 17712652.1
(22) Date of filing: 10.03.2017
(51) Int. Cl.: G06F 9/50

(54) **NETWORK VIRTUALIZATION OF CONTAINERS IN COMPUTING SYSTEMS**
NETZWERKVIRTUALISIERUNG VON BEHÄLTERN IN COMPUTERSYSTEMEN
VIRTUALISATION DE RÉSEAU DE CONTENEURS DANS DES SYSTÈMES INFORMATIQUES

(30) Priority: 17.03.2016 US 201662309933 P; 25.06.2016 US 201615193020
(43) Date of publication of application: 23.01.2019
(73) Proprietor: Microsoft Technology Licensing LLC, Redmond, Washington 98052-6399 (US)
(72) Inventor: BANSAL, Deepak, Redmond, Washington 98052-6399 (US); SRIVASTAVA, Nisheeth, Redmond, Washington 98052-6399 (US); SHARMA, Sushant, Redmond, Washington 98052-6399 (US)
(74) Representative: Grünecker Patent- und Rechtsanwälte PartG mbB
(86) International application number: PCT/US2017/021699
(87) International publication number: WO 2017/160605

(56) References cited:
- WO-A1-2015/126292
- US-A1- 2008 151 893

## Description

### BACKGROUND

Datacenters providing cloud computing services typically include routers, switches, bridges, and other physical network devices that interconnect a large number of servers, network storage devices, and other types of physical computing devices via wired or wireless network links. The individual servers can host one or more virtual machines or other types of virtualized components accessible to cloud computing clients. The virtual machines can exchange messages such as emails via virtual networks in accordance with one or more network protocols supported by the physical network devices.

WO2015126292 (A1) describes a method for deploying software containers by a container engine manager, CEM. The CEM instantiates a first container engine and instantiates a second container engine. The CEM determines that a first software container utilizing a first port number should be deployed. In response to determining that the first software container should be deployed, the CEM selects a container engine from a set of available container engines. The set of container engines comprises the first container engine and the second container engine. The CEM then causes the selected container engine to instantiate the first software container. The CEM associates the first port number with an IP address of the selected container engine.

It is the object of the present invention to improve deployment of software containers.

This object is solved by the subject-matter of the independent claim.

Embodiments are defined by the dependent claims

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Cloud computing can utilize multiple virtual machines on one or more servers to accommodate computation, communications, or other types of cloud service requests from users. However, virtual machines can incur a significant amount of overhead. For example, each virtual machine needs a corresponding guest operating system, virtual memory, and applications, all of which can amount to tens of gigabytes in size. In contrast, containers (e.g., Dockers) are software packages that each contain a piece of software in a complete filesystem with everything the piece of software needs to run, such as code, runtime, system tools, system libraries, etc. Containers running on a single server or virtual machine can all share the same operating system kernel and can make efficient use of system and/or virtual memory.

In certain computing systems, containers on a host (e.g., a server or a virtual machine) are assigned network addresses in an isolated name space (e.g., 172.168,0.0 address space) typically specific to the host. Multiple containers on a host can be connected together via a bridge. Network connectivity outside the host can be provided by network address translation ("NAT") to a network address of the host (e.g., 10.0.0.1). Such an arrangement can limit the functionalities of the containers on a host. For example, network addresses assigned to containers are not routable outside the host to other containers on other hosts or to the Internet. In another example, containers may not expose any arbitrary service endpoint. For instance, two containers on a host may not both expose service endpoints on port 80 because only one is allowed to do so. Containers can also be limited from running applications that dynamically negotiate a port, such as passive FTP, remote procedure call, or session initiated protocol applications.

Several embodiments of the disclosed technology are directed to provide routable network addresses (e.g., IP addresses) to containers on a host. The routable network addresses can allow connections between containers on different hosts without network name translation and allow access to network services such as load balancing, routing selection, etc. In certain implementations, containers are individually assigned an IP address from a virtual network ("vnet"), which can be a tenant vnet or a default vnet created on behalf of the tenant. Network traffic to/from the containers can be delivered using the assigned IP addresses directly rather than utilizing network name translation to the IP address of the host. The IP address of the host can be another address from the same or a different vnet than that associated with the containers. In certain embodiments, multiple containers on a host can all be in one vnet. In other embodiments, multiple containers on a host can belong to multiple virtual networks.

Several embodiments of the disclosed technology can enable flexible and efficient implementation of networking for containers in cloud-based computing systems. For example, a container can be assigned an IP address from a vnet, and thus the IP address is routable and has full connectivity on all ports within a vnet. The container can thus be connected to another container on the same or different host at IP level on any suitable port. Further, the assigned IP addresses are now visible to the host. As such, the containers can have access to all the software defined networking ("SDN") capabilities currently available to virtual machines without incurring a change in existing SDN infrastructure. Example SDN capabilities can include access control lists, routes, load balancing, on premise connectivity, etc.

### BRIEF DESCRIPTION OF THE DRAWINGS

Figure 1 is a schematic diagram illustrating a computing system having network virtualization of containers in accordance with embodiments of the disclosed technology.
Figure 2 is a schematic diagram illustrating certain hardware/software components of the computing system of Figure 1 in accordance with embodiments of the disclosed technology.
Figure 3 is a block diagram illustrating hardware/software components of a cloud controller suitable for the computing system of Figure 1 in accordance with embodiments of the disclosed technology.
Figures 4A-4B are schematic diagrams illustrating different topologies of hosted containers in accordance with embodiments of the disclosed technology.
Figure 5A is a flowchart illustrating a process of network virtualization of containers in accordance with embodiments of the disclosed technology.
Figure 5B is a flowchart illustrating operations of configuring network settings for a container in accordance with embodiments of the disclosed technology.
Figure 6 is a computing device suitable for certain components of the computing system in Figure 1.

### DETAILED DESCRIPTION

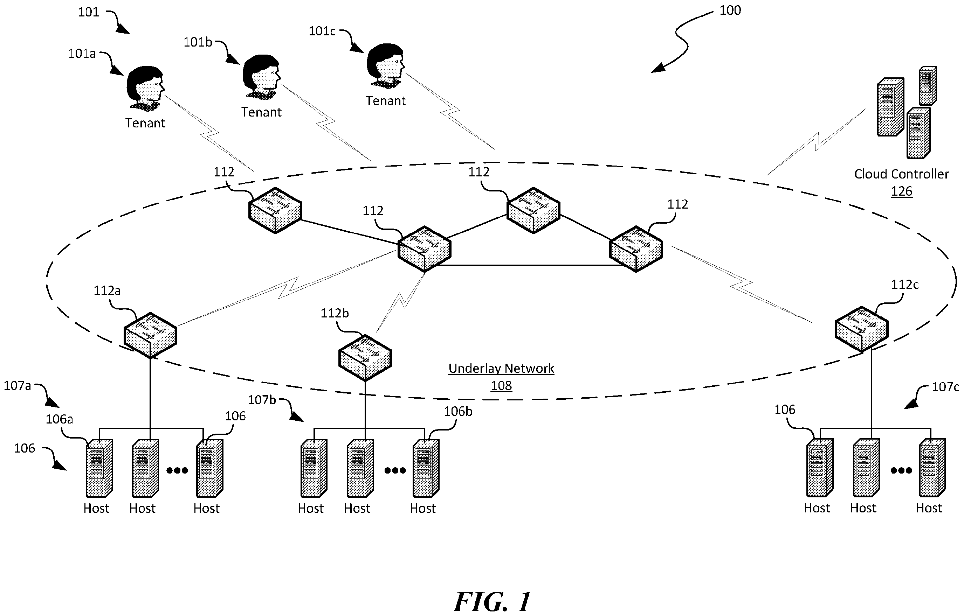

Certain embodiments of systems, devices, components, modules, routines, data structures, and processes for network virtualization of containers in datacenters or other suitable computing systems are described below. In the following description, specific details of components are included to provide a thorough understanding of certain embodiments of the disclosed technology. A person skilled in the relevant art will also understand that the technology can have additional embodiments. The technology can also be practiced without several of the details of the embodiments described below with reference to Figures 1-6.

As used herein, the term a "computing system" generally refers to an interconnected computer network having a plurality of network nodes that connect a plurality of servers or hosts to one another or to external networks (e.g., the Internet). The term "network node" generally refers to a physical network device. Example network nodes include routers, switches, hubs, bridges, load balancers, security gateways, or firewalls. A "host" generally refers to a physical computing device configured to implement, for instance, one or more virtual machines or other suitable virtualized components. For example, a host can include a server having a hypervisor configured to support one or more virtual machines or other suitable types of virtual components.

A computer network can be conceptually divided into an overlay network implemented over an underlay network. An "overlay network" generally refers to an abstracted network implemented over and operating on top of an underlay network. The underlay network can include multiple physical network nodes interconnected with one another. An overlay network can include one or more virtual networks. A "virtual network" generally refers to an abstraction of a portion of the underlay network in the overlay network. A virtual network can include one or more virtual end points referred to as "tenant sites" individually used by a user or "tenant" to access the virtual network and associated computing, storage, or other suitable resources. A tenant site can host one or more tenant end points ("TEPs"), for example, virtual machines. The virtual networks can interconnect multiple TEPs on different hosts. Virtual network nodes in the overlay network can be connected to one another by virtual links individually corresponding to one or more network routes along one or more physical network nodes in the underlay network.

Also used herein, the term "container" generally refers to a software package that contains a piece of software (e.g., an application) in a complete filesystem having codes (e.g., executable instructions), a runtime environment, system tools, system libraries, or other suitable components sufficient to execute the piece of software. Containers running on a single server or virtual machine can all share the same operating system kernel and can make efficient use of system or virtual memory. A container can have similar resource isolation and allocation benefits as virtual machines. However, a different architectural approach allows a container to be much more portable and efficient than a virtual machine. For example, a virtual machine typically includes one or more applications, necessary binaries and libraries of the applications, and an entire operating system. In contrast, a container can include an application and all of its dependencies, but shares an operating system kernel with other containers on the same host. As such, containers can be more resource efficient and flexible than virtual machines. One example container is a Docker provided by Docker, Inc. of San Francisco, California.

In conventional computing systems, containers on a host (e.g., a server or a virtual machine) are assigned network addresses in an isolated name space (e.g., 172.168.0.0 address space) typically specific to the host. Multiple containers on a host can be connected together via a bridge. Network connectivity outside the host typically utilizes network address translation to a network address of the host (e.g., 10.0.0.1). Such an arrangement can limit the functionalities of the containers. For example, network addresses assigned to containers are not routable outside the host. In another example, containers may not expose any arbitrary service endpoint. For instance, two containers on a host may not both expose service endpoints on port 80 because only one is allowed to do so. Containers can also be limited from running passive FTP, remote procedure call, or session initiated protocol applications that dynamically negotiate a port. Several embodiments of he disclosed technology can enable flexible and efficient implementation of networking for containers in computing systems via network virtualization, as described in more detail below with reference to Figures 1-6.

Figure 1 is a schematic diagram illustrating a computing system 100 having network virtualization of containers in accordance with embodiments of the disclosed technology. As shown in Figure 1, the computing system 100 can include an underlay network 108 interconnecting a plurality of hosts 106, a plurality of tenants 101, and a cloud controller 126. Even though particular components of the computing system 100 are shown in Figure 1, in other embodiments, the computing system 100 can also include additional and/or different components. For example, the computing system 100 can also include network storage devices, maintenance managers, and/or other suitable components (not shown).

As shown in Figure 1, the underlay network 108 can include one or more network nodes 112 that interconnect the multiple hosts 106, the tenants 101, and the cloud controller 126. In certain embodiments, the hosts 106 can be organized into racks, action zones, groups, sets, or other suitable divisions. For example, in the illustrated embodiment, the hosts 106 are grouped into three host sets identified individually as first, second, and third host sets 107a-107c. In the illustrated embodiment, each of the host sets 107a-107c is operatively coupled to a corresponding network nodes 112a-112c, respectively, which are commonly referred to as "top-of-rack" or "TOR" network nodes. The TOR network nodes 112a-112c can then be operatively coupled to additional network nodes 112 to form a computer network in a hierarchical, flat, mesh, or other suitable types of topology. The computer network can allow communication between hosts 106, the cloud controller 126, and the tenants 101. In other embodiments, the multiple host sets 107a-107c may share a single network node 112 or can have other suitable arrangements.

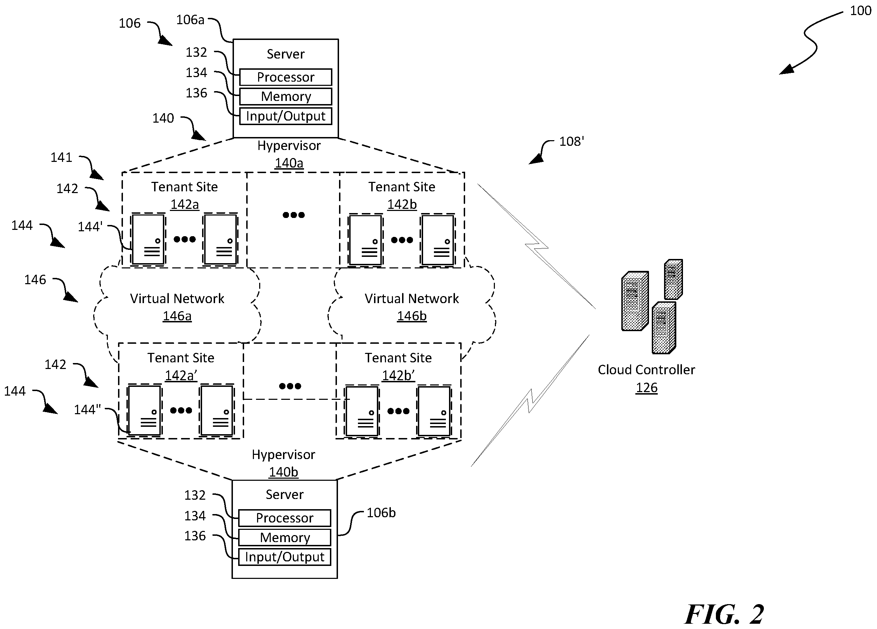

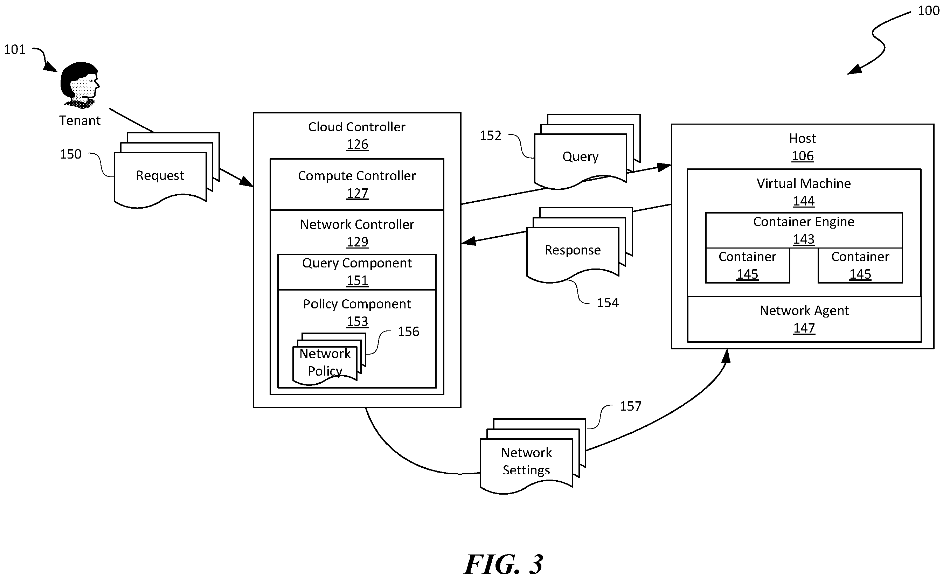

The hosts 106 can individually be configured to provide computing, storage, and/or other suitable cloud computing services to the tenants 101. For example, as described in more detail below with reference to Figure 2, one of the hosts 106 can initiate and maintain one or more virtual machines 144 (shown in Figure 2) or containers 145 (shown in Figure 3) upon requests from the tenants 101. The tenants 101 can then utilize the initiated virtual machines 144 or containers 145 to perform computation, communication, and/or other suitable tasks. In certain embodiments, one of the hosts 106 can provide virtual machines 144 for multiple tenants 101. For example, the host 106a can host three virtual machines 144 individually corresponding to each of the tenants 101a-101c. In other embodiments, multiple hosts 106 can host virtual machines 144 for the tenants 101a-101c.

In accordance with several embodiments of the disclosed technology, the cloud controller 126 can be configured to manage instantiation of containers 145 on the hosts 106 or virtual machines 144. In certain embodiments, the cloud controller 126 can include a standalone server, desktop computer, laptop computer, or other suitable types of computing device operatively coupled to the underlay network 108. In other embodiments, the cloud controller 126 can include one of the hosts 106. In further embodiments, the cloud controller 126 can be implemented as one or more network services executing on and provided by, for example, one or more of the hosts 106 or another server (not shown). Example components of the cloud controller 126 are described in more detail below with reference to Figure 3.

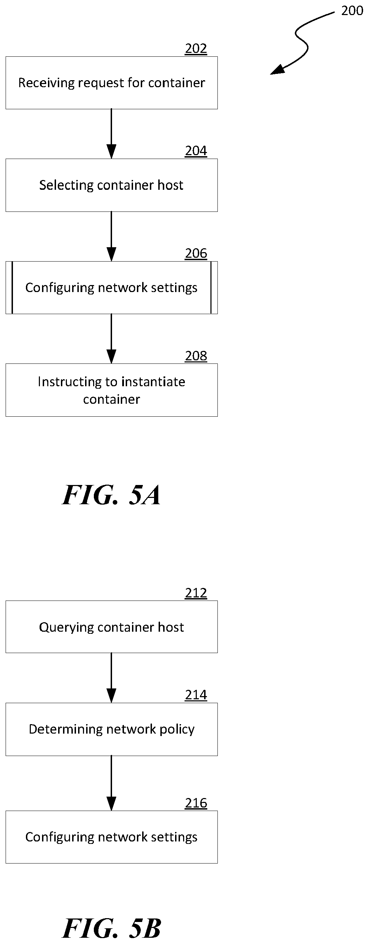

Figure 2 is a schematic diagram illustrating an overlay network 108' implemented on the underlay network 108 of Figure 1 in accordance with embodiments of the disclosed technology. In Figure 2, only certain components of the underlay network 108 of Figure 1 are shown for clarity. As shown in Figure 2, the first host 106a and the second host 106b can each include a processor 132, a memory 134, and an input/output component 136 operatively coupled to one another. The processor 132 can include a microprocessor, a field-programmable gate array, and/or other suitable logic devices. The memory 134 can include volatile and/or nonvolatile media (e.g., ROM; RAM, magnetic disk storage media; optical storage media; flash memory devices, and/or other suitable storage media) and/or other types of computer-readable storage media configured to store data received from, as well as instructions for, the processor 132 (e.g., instructions for performing the methods discussed below with reference to Figure 5A). The input/output component 136 can include a display, a touch screen, a keyboard, a mouse, a printer, and/or other suitable types of input/output devices configured to accept input from and provide output to an operator and/or an automated software controller (not shown).

The first and second hosts 106a and 106b can individually contain instructions in the memory 134 executable by the processors 132, cause the individual processors 132 to provide a hypervisor 140 (identified individually as first and second hypervisors 140a and 140b) and a status agent 141 (identified individually as first and second status agent 141a and 141b). Even though the hypervisor 140 and the status agent 141 are shown as separate components, in other embodiments, the status agent 141 can be a part of the hypervisor 140 or an operating system (not shown) executing on the corresponding host 106. In further embodiments, the status agent 141 can be a standalone application.

The hypervisors 140 can individually be configured to generate, monitor, terminate, and/or otherwise manage one or more virtual machines 144 organized into tenant sites 142. For example, as shown in Figure 2, the first host 106a can provide a first hypervisor 140a that manages first and second tenant sites 142a and 142b, respectively. The second host 106b can provide a second hypervisor 140b that manages first and second tenant sites 142a' and 142b', respectively. The hypervisors 140 are individually shown in Figure 2 as a software component. However, in other embodiments, the hypervisors 140 can be firmware and/or hardware components. The tenant sites 142 can each include multiple virtual machines 144 for a particular tenant (not shown). For example, the first host 106a and the second host 106b can both host the tenant site 142a and 142a' for a first tenant 101a (Figure 1). The first host 106a and the second host 106b can both host the tenant site 142b and 142b' for a second tenant 101b (Figure 1). Each virtual machine 144 can be executing a corresponding operating system, middleware, and/or applications.

Also shown in Figure 2, the computing system 100 can include an overlay network 108' having one or more virtual networks 146 that interconnect the tenant sites 142a and 142b across multiple hosts 106. For example, a first virtual network 142a interconnects the first tenant sites 142a and 142a' at the first host 106a and the second host 106b. A second virtual network 146b interconnects the second tenant sites 142b and 142b' at the first host 106a and the second host 106b. Even though a single virtual network 146 is shown as corresponding to one tenant site 142, in other embodiments, multiple virtual networks 146 (not shown) may be configured to correspond to a single tenant site 146.

The virtual machines 144 on the virtual networks 146 can communicate with one another via the underlay network 108 (Figure 1) even though the virtual machines 144 are located on different hosts 106. Communications of each of the virtual networks 146 can be isolated from other virtual networks 146. In certain embodiments, communications can be allowed to cross from one virtual network 146 to another through a security gateway or otherwise in a controlled fashion. A virtual network address can correspond to one of the virtual machine 144 in a particular virtual network 146. Thus, different virtual networks 146 can use one or more virtual network addresses that are the same. Example virtual network addresses can include IP addresses, MAC addresses, and/or other suitable addresses.

Figure 3 is a block diagram illustrating certain hardware/software components of a cloud controller 126 suitable for the computing system 100 shown in Figures 1 and 2 in accordance with embodiments of the disclosed technology. In Figure 3 and in other Figures herein, individual software components, objects, classes, modules, and routines may be a computer program, procedure, or process written as source code in C, C++, C#, Java, and/or other suitable programming languages. A component may include, without limitation, one or more modules, objects, classes, routines, properties, processes, threads, executables, libraries, or other components. Components may be in source or binary form. Components may include aspects of source code before compilation (e.g., classes, properties, procedures, routines), compiled binary units (e.g., libraries, executables), or artifacts instantiated and used at runtime (e.g., objects, processes, threads).

Components within a system may take different forms within the system. As one example, a system comprising a first component, a second component and a third component can, without limitation, encompass a system that has the first component being a property in source code, the second component being a binary compiled library, and the third component being a thread created at runtime. The computer program, procedure, or process may be compiled into object, intermediate, or machine code and presented for execution by one or more processors of a personal computer, a network server, a laptop computer, a smartphone, and/or other suitable computing devices.

Equally, components may include hardware circuitry. A person of ordinary skill in the art would recognize that hardware may be considered fossilized software, and software may be considered liquefied hardware. As just one example, software instructions in a component may be burned to a Programmable Logic Array circuit, or may be designed as a hardware circuit with appropriate integrated circuits. Equally, hardware may be emulated by software. Various implementations of source, intermediate, and/or object code and associated data may be stored in a computer memory that includes read-only memory, random-access memory, magnetic disk storage media, optical storage media, flash memory devices, and/or other suitable computer readable storage media excluding propagated signals.

As shown in Figure 3, the host 106 can be configured to host one or more virtual machines 144, for example, via a hypervisor 140 (Figure 2). Only one virtual machine 144 is shown in Figure 3 for illustration purposes. The host 106 can also include a network agent 147 configured to monitor parameters of network operations on the host 106 and/or the virtual machine 144. For example, the network agent 147 can monitor and parameters of network configuration (e.g., vnet identifications, network namespace, etc.) and operational parameters (e.g., traffic load, traffic pattern, etc.) on the host 106 and/or the virtual machine 144. The network agent 147 can also be configured to store the monitored parameters at least temporarily and respond to one or more query 152 for the stored parameters of network operations.

As also shown in Figure 3, the virtual machine 144 hosted on the host 106 can include a container engine 143 configured to manage, monitor, and/or control operations of one or more containers 145. Two containers 145 are shown in Figure 3 for illustration purposes though the container engine 143 can be configured to facilitate any suitable number of containers 145. For example, the container engine 143 can be configured to instantiate, schedule, or monitor the containers 145 based on requirements from the tenant 101. In another example, the container engine 143 can also be configured to delete containers 145 from the virtual machine 144 and/or the host 106. One suitable example container engine 143 is Google Container Engine provided by Google, Inc. of Mountain View, California.

Also shown in Figure 3, the cloud controller 126 can include a compute controller 127 operatively coupled to a network controller 129. Even though the compute controller 127 and the network controller 129 are shown as integrated components of the cloud controller 126, in other embodiments, the compute controller 127 and the network controller 129 can also be distributed in suitable fashions in the computing system 100 (Figure 1). In further embodiments, one or both of the compute controller 127 and the network controller 129 can be a cloud service provided by, for example, one of the hosts 106 in Figure 1.

The compute controller 127 can be configured to determine a computation and/or processing demand for a user request 150 for instantiate a container 145. For example, the compute controller 127 can be configured to determine one or more of processing speed, memory usage, storage usage, or other suitable demands based on a size (e.g., application size) and/or execution characteristics (e.g., low latency, high latency, etc.) of the requested container 145. The compute controller 127 can also be configured to select a host 106 and/or a virtual machine 144 that can accommodate the requested instantiation of the container 145 based on the determined demands and operational profiles, current workload, or other suitable parameters of available hosts 106 and/or virtual machines 144. In certain embodiments, the compute controller 127 can be a fabric controller such as Microsoft Azure® controller or a portion thereof. In other embodiments, the compute controller 127 can include other suitable types of suitably configured controllers.

The network controller 129 can be configured to determine network configurations for the requested instantiation of the container 145. As shown in Figure 3, the network controller 129 can include a query component 151 and a policy component 153 operatively coupled to one another. The query component 151 can be configured to transmit a query 152 to the host 106 and/or the virtual machine 144 once the compute controller 127 selects the host 106 and/or the virtual machine 144 for hosting the requested container 145. In response to the query 152, a network agent 147 on the host 106 can provide a response 154 to the network controller 129. The response 154 can include data representing various parameters related to network operations of the host 106 and/or the virtual machine 144. For example, the response 154 can include information related to configurations or parameters of load balancing, routing configurations, virtual network configurations (e.g., vnet identifications), and/or other suitable types of network parameters. The query component 151 can be configured to forward the response 154 to the policy component 153 for further processing.

The policy component 153 can be configured to generate a network policy 156 for the requested container 145 based on the received response 154. For example, the network policy 156 can include an SDN policy that specifies, *inter alia,* settings for network route determination, load balancing, and/or other parameters. The network policy 156 can be applied in a virtual network node (e.g., a virtual switch) based on an assigned IP address of a container 145. The network policy 156 can also be applied in a generally consistent fashion for both containers 145 and virtual machines 144 and thus enabling seamless connectivity between containers 145 and virtual machines 144. In certain embodiments, the network policy 156 can be specified consistently for both containers 145 and virtual machines 144 using a network namespace object, which can be an identifier for a container 145 or a virtual machine 144 and maps to an IP address of the container 145 or virtual machine 144. A network namespace can contain its own network resources such as network interfaces, routing tables, etc. In other embodiments, the network policy 156 can be specified differently for containers 145 and virtual machines 144 to create resource separation or for other suitable purposes.

In operation, the tenant 101 transmits the request 150 for instantiate a container 145 to the cloud controller 126 via, for example, the underlay network 108 (Figure 1). In response, the compute controller 127 of the cloud controller 126 can determine one or more resource demand related to processing, memory utilization, data storage, communications, etc. for the requested container 145. The compute controller 127 can then select a host 106 and/or a virtual machine 144 to provide the requested container 145. In the illustrated embodiment, the containers 145 are hosted in a virtual machine 144. In other embodiments, the containers 145 can be hosted directly by the host 106.

Once the compute controller 127 selects the host 106 and/or the virtual machine 144, the network controller 129 transmits a query 152 to the host 106 and/or the virtual machine 144 based on, for example, an IP address of the host 106 and/or the virtual machine 144. In response to the query 152, the network agent 147 on the host 106 can provide a response 154 to the network controller 129. The response 154 can include data representing various parameters related to network operations on the host 106 and/or the virtual machine 144, such as load balancing, routing configurations, virtual network configurations (e.g., vnet identifications), and/or other suitable types of network parameters.

The network controller 129 can then configure a network policy 156 for the requested container 145 based on the received response 154. For example, the network policy 156 can include an SDN policy that specifies, *inter alia,* settings for network route determination, load balancing, and/or other parameters. The network controller 129 can then instruct the host 106 and/or the virtual machine 144 to instantiate the requested container 145 based on the configured network policy 156. In certain embodiments, the network controller 129 can assign certain network settings 157 to the instantiated container 145 according to, for example, DHCP protocol and the determined network policy 156. In other embodiments, the container engine 143 can be configured to configure the network settings 157 by, for instance, requesting the network policy 156 from the network controller 129. The network settings 157 can include, for instance, an IP address in a virtual network 146 (Figure 2), a domain name server, a network mask, and other suitable network parameters.

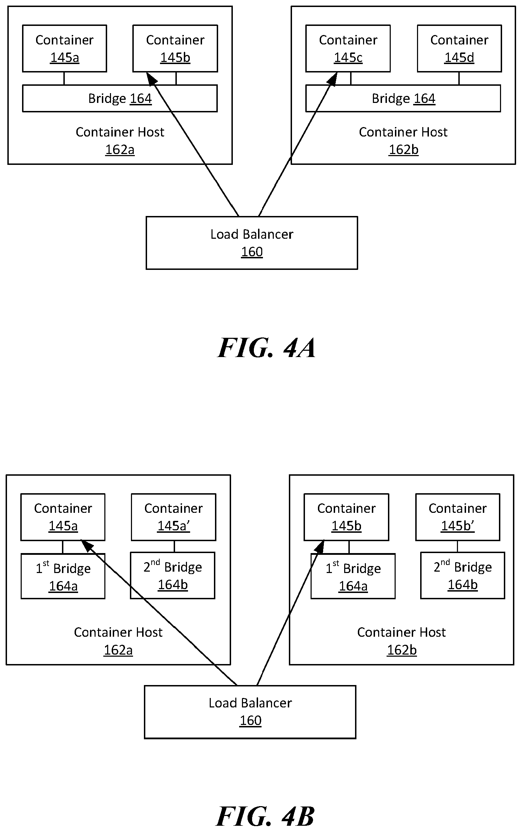

The container engine 143 can then instantiate the requested container 145 based on the received network settings 157. In accordance with one aspect of the disclosed technology, the assigned IP address of the container 145 can include a routable vnet address exposed to virtual machines 144 and to other containers 145 on the same or different hosts 106 or virtual machines 144. For example, as shown in Figure 4A, a first container host 162a (e.g., a host 106 or a virtual machine 144 in Figure 2 or 3) can include first and second containers 145a and 145b. A second container host 162b (e.g., another host 106 or another virtual machine 144 on the same or different host 106 in Figure 2 or 3) can include third and fourth containers 145c and 145d. The first, second, third, and fourth containers 145a-145d can be bridged via the bridge 164 and can all belong to the same virtual network 146 (Figure 2), for instance, by having IP addresses 10.0.0.1, 10.0.02, 10.0.0.3, and 10.0.0.4, respectively. In certain embodiments, the container host 162a and 162b can belong to the same virtual network, for instance, by having IP addresses 10.0.0.5 and 10.0.0.6, respectively. In other embodiments, at least one of the container host 162a and 162b can belong to a different virtual network 146. In further embodiments, at least two of the container 145 can have the same IP addresses while belonging to different virtual networks.

In further embodiments, the first and second container hosts 162a and 162b can individually host containers 145 that belong to different virtual networks 146. For example, as shown in Figure 4B, the first container host 162a can include a container 145a that belongs to a first virtual network 146a and another container 145a' that belongs to a second virtual network 146b. The second container host 162b can include a container 145b that belongs to the first virtual network 146a and another container 145b' that belongs to the second virtual network 146b. The containers 145a and 145a' are bridged together via the first bridge 164a. The containers 145b and 145b' are bridged together via the second bridge 164b. Similar to the embodiments discussed above with reference to Figure 4A, the first and second container hosts 162a and 162b can belong to the same first or second virtual network 164a and 164b or belong to different virtual networks (not shown).

Several embodiments of he disclosed technology can enable flexible and efficient implementation of networking for containers 145 in computing systems. For example, a container 145 can be assigned an IP address from a virtual network 146, and thus the IP address is routable and has full connectivity on all ports within the virtual network 146. One container (e.g., the container 145a in Figure 4B) can thus communicate with another container on the same container host 162a (e.g., container 145a') or on a different container host 162 (e.g., container 145b) at IP level on any port. Further, the assigned IP addresses are now visible to the host 106. As such, the containers 145 can have access to the SDN capabilities currently available to virtual machines 144, such as, for example, access control lists, routes, load balancing, on premise connectivity, etc., without incurring changes in existing SDN infrastructure.

Several embodiments of the disclosed technology can allow the containers 145 to communicate with each other bi-directionally when the containers are hosted on the same or different virtual machines 144. For example, as shown in Figure 4A, the container 145a can communicate with the container 145c based on respective IP addresses even though these two containers 145a and 145b are hosted on different container hosts 162a and 162b. The containers 145 can also communicate over ports or can negotiate ports dynamically. The containers 145 can also be isolated from other containers 145 via virtual network isolation or other suitable techniques. The containers 145 can also be configured to provide performance differentiation or guarantees. The containers 145 can also have access to load balancing both on a private endpoint and a public endpoint.

Figure 5A is a flowchart illustrating a process 200 of network virtualization for containers in accordance with embodiments of the disclosed technology. Even though the process 200 is described in relation to the computing system 100 of Figure 1 and 2 and the hardware/software components of Figure 3, in other embodiments, the process 200 can also be implemented in other suitable systems.

As shown in Figure 5A, the process 200 includes receiving a request for instantiating a container at stage 202, from, for example, the tenants 101 in Figure 1. The process 200 can then include selecting a container host for the requested container at stage 204. In certain embodiments, selecting the container host includes determining a resource demand and/or availability for the requested container utilizing, for example, the compute controller 127 in Figure 3. In other embodiments, selecting the container host can also include load balancing, prioritizing, and/or applying other suitable techniques.

The process 200 can then include configuring network settings for the requested container at stage 206. In certain embodiments, as shown in Figure 5B, configuring the network settings can include initially querying the selected container host for current network operational parameters related to, for example, network load balancing, network routing, etc., at stage 212. The network operational parameters can then be used to determine a network policy at stage 214. The operations can further include configuring suitable network settings, such as virtual network identification, IP address, domain name server, etc. for the requested container at stage 216. Referring back to Figure 5A, the process 200 can then include instructing the container host to instantiate the requested container based on the configured network settings at stage 208.

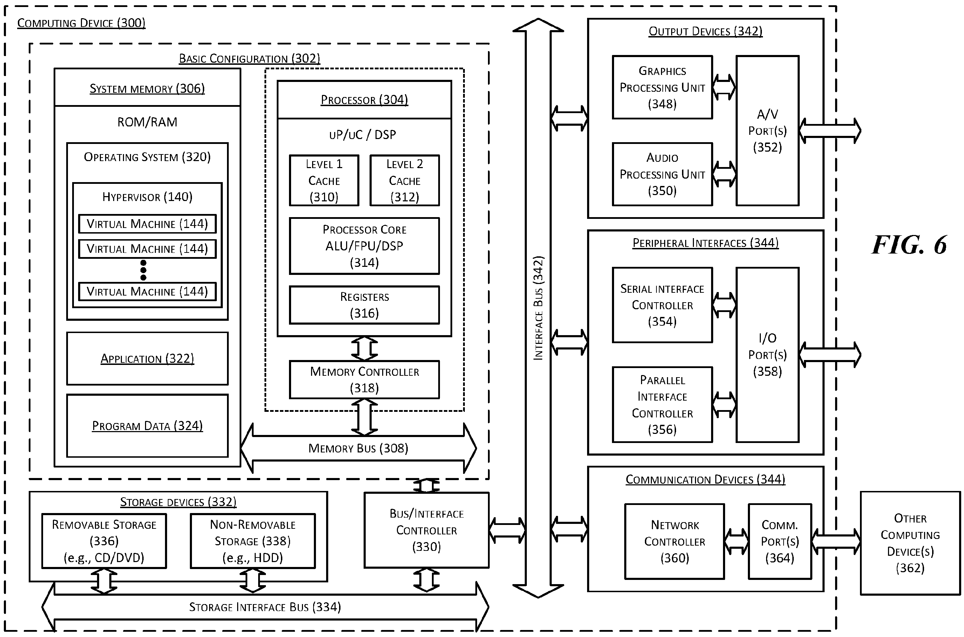

Figure 6 is a computing device 300 suitable for certain components of the computing system 100 in Figure 1. For example, the computing device 300 can be suitable for the hosts 106 or the cloud controller 126 of Figure 1. In a very basic configuration 302, the computing device 300 can include one or more processors 304 and a system memory 306. A memory bus 308 can be used for communicating between processor 304 and system memory 306.

Depending on the desired configuration, the processor 304 can be of any type including but not limited to a microprocessor (µP), a microcontroller (µC), a digital signal processor (DSP), or any combination thereof. The processor 304 can include one more levels of caching, such as a level-one cache 310 and a level-two cache 312, a processor core 314, and registers 316. An example processor core 314 can include an arithmetic logic unit (ALU), a floating point unit (FPU), a digital signal processing core (DSP Core), or any combination thereof. An example memory controller 318 can also be used with processor 304, or in some implementations memory controller 318 can be an internal part of processor 304.

Depending on the desired configuration, the system memory 306 can be of any type including but not limited to volatile memory (such as RAM), non-volatile memory (such as ROM, flash memory, etc.) or any combination thereof. The system memory 306 can include an operating system 320, one or more applications 322, and program data 324. As shown in Figure 8, the operating system 320 can include a hypervisor 140 for managing one or more virtual machines 144. This described basic configuration 302 is illustrated in Figure 8 by those components within the inner dashed line.

The computing device 300 can have additional features or functionality, and additional interfaces to facilitate communications between basic configuration 302 and any other devices and interfaces. For example, a bus/interface controller 330 can be used to facilitate communications between the basic configuration 302 and one or more data storage devices 332 via a storage interface bus 334. The data storage devices 332 can be removable storage devices 336, non-removable storage devices 338, or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media can include volatile and nonvolatile, removable and non-removable media implemented in any method or technology for storage of information, such as computer readable instructions, data structures, program modules, or other data. The term "computer readable storage media" or "computer readable storage device" excludes propagated signals and communication media.

The system memory 306, removable storage devices 336, and non-removable storage devices 338 are examples of computer readable storage media. Computer readable storage media include, but not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other media which can be used to store the desired information and which can be accessed by computing device 300. Any such computer readable storage media can be a part of computing device 300. The term "computer readable storage medium" excludes propagated signals and communication media.

The computing device 300 can also include an interface bus 340 for facilitating communication from various interface devices (e.g., output devices 342, peripheral interfaces 344, and communication devices 346) to the basic configuration 302 via bus/interface controller 330. Example output devices 342 include a graphics processing unit 348 and an audio processing unit 350, which can be configured to communicate to various external devices such as a display or speakers via one or more A/V ports 352. Example peripheral interfaces 344 include a serial interface controller 354 or a parallel interface controller 356, which can be configured to communicate with external devices such as input devices (e.g., keyboard, mouse, pen, voice input device, touch input device, etc.) or other peripheral devices (e.g., printer, scanner, etc.) via one or more I/O ports 358. An example communication device 346 includes a network controller 360, which can be arranged to facilitate communications with one or more other computing devices 362 over a network communication link via one or more communication ports 364.

The network communication link can be one example of a communication media. Communication media can typically be embodied by computer readable instructions, data structures, program modules, or other data in a modulated data signal, such as a carrier wave or other transport mechanism, and can include any information delivery media. A "modulated data signal" can be a signal that has one or more of its characteristics set or changed in such a manner as to encode information in the signal. By way of example, and not limitation, communication media can include wired media such as a wired network or direct-wired connection, and wireless media such as acoustic, radio frequency (RF), microwave, infrared (IR) and other wireless media. The term computer readable media as used herein can include both storage media and communication media.

The computing device 300 can be implemented as a portion of a small-form factor portable (or mobile) electronic device such as a cell phone, a personal data assistant (PDA), a personal media player device, a wireless web-watch device, a personal headset device, an application specific device, or a hybrid device that include any of the above functions. The computing device 300 can also be implemented as a personal computer including both laptop computer and non-laptop computer configurations.

Specific embodiments of the technology have been described above for purposes of illustration. However, various modifications can be made without deviating from the foregoing disclosure. In addition, many of the elements of one embodiment can be combined with other embodiments in addition to or in lieu of the elements of the other embodiments. Accordingly, the technology is not limited except as by the appended claims.

## Claims

1. A method (200) performed by a computing device (106) in a computing system having a plurality of hosts (144) interconnected by a computer network, comprising:
receiving (202) a request to instantiate a container from a user, the container including a software package having a software application in a filesystem sufficiently complete for execution of the application in an operating system by a processor;
in response to the received request, selecting (204) one of the hosts in the computer system as a container host to instantiate the requested container;
based on the selection of the host, querying (212) the selected host for current parameters of network operation on the selected host;
based on the queried current parameters, configuring network settings for the requested container to be instantiated on the selected host in the computer system, the network settings including an assigned IP address based on which the container is accessible from outside of the selected host; and
transmitting an instruction to the selected host to instantiate (208) the requested container based on the configured network settings, the instantiated container being network addressable from outside of the container selected host.

2. The method (200) of claim 1 wherein selecting one of the hosts in the computer system includes selecting a physical server in the computer system as the container host.

3. The method (200) of claim 1 wherein selecting one of the hosts in the computer system includes selecting a virtual machine hosted on a physical server in the computer system as the container host.

4. The method (200) of claim 1 wherein:
the assigned IP address includes a first IP address in a virtual network, wherein the virtual network is an abstraction of a portion of the computer network; and
the selected host has a second assigned IP address in the same virtual network.

5. The method (200) of claim 1 wherein:
the assigned IP address includes a first IP address in a first virtual network; and
the selected host has a second assigned IP address in a second virtual network different than the first virtual network, the first IP address is the same as the second IP address.

6. The method (200) of claim 1 wherein configuring network settings for the requested container further includes:
querying the selected host for parameters of network operations on the selected host;
receiving a response to the query for current parameters of network operation from the selected host, the response containing the parameters of network operations on the selected host; and
determining a software defined network policy as a part of the network settings for the requested container based on the received parameters of network operations on the selected host in the received response, wherein the software defined network policy specifies settings for network route determination, load balancing, and/or other parameters.

7. The method (200) of claim 6 wherein the software defined network policy including information regarding settings for network route determination and load balancing for the requested container.

8. The method (200) of claim 1 wherein:
the container is a first container;
the host is a first host; and
the method further includes routing a message from a second container or a virtual machine to the first container based on the assigned IP address of the first container, the second container or the virtual machine residing on a second host different than the first host.

9. The method (200) of claim 6 wherein:
the container is a first container;
the container host includes a first virtual machine; and
the method further includes routing a message from a second container to the first container based on the assigned IP address of the first container, the second container residing on a second virtual machine different than the first virtual machine.

10. A computing device in a computing system having a plurality of hosts interconnected by a computer network, the computing device comprising a processor and a memory having instructions executable by the processor to cause the processor to perform a process according to one of claims 1-9.

## Patentansprüche

1. Verfahren (200), das durch eine Rechenvorrichtung (106) in einem Rechensystem durchgeführt wird, das eine Vielzahl von Hosts (144) aufweist, die durch ein Computernetzwerk miteinander verbunden sind, umfassend:
Empfangen (202) einer Anfrage zum Instanziieren eines Containers von einem Benutzer, wobei der Container ein Softwarepaket einschließt, das eine Softwareanwendung in einem Dateisystem aufweist, das für eine Ausführung der Anwendung in einem Betriebssystem durch einen Prozessor ausreichend vollständig ist;
als Reaktion auf die empfangene Anfrage, Auswählen (204) eines der Hosts in dem Computersystem als einen Container-Host zum Instanziieren des angefragten Containers;
basierend auf der Auswahl des Hosts, Abfragen (212) des ausgewählten Hosts nach aktuellen Parametern einer Netzwerkoperation auf dem ausgewählten Host;
basierend auf den abgefragten aktuellen Parametern, Konfigurieren von Netzwerkeinstellungen, um den angefragten Container auf dem ausgewählten Host in dem Computersystem zu instanziieren, wobei die Netzwerkeinstellungen eine zugewiesene IP-Adresse einschließen, basierend auf der der Container von außerhalb des ausgewählten Hosts zugänglich ist; und
Übertragen einer Anweisung zu dem ausgewählten Host zum Instanziieren (208) des angefragten Containers basierend auf den konfigurierten Netzwerkeinstellungen, wobei der instanziierte Container von außerhalb des ausgewählten Container-Hosts netzwerkadressierbar ist.

2. Verfahren (200) nach Anspruch 1, wobei das Auswählen eines der Hosts in dem Computersystem ein Auswählen eines physischen Servers in dem Computersystem als den Container-Host einschließt.

3. Verfahren (200) nach Anspruch 1, wobei das Auswählen eines der Hosts in dem Computersystem ein Auswählen einer virtuellen Maschine, die auf einem physischen Server in dem Computersystem gehostet ist, als den Container-Host einschließt.

4. Verfahren (200) nach Anspruch 1, wobei:
die zugewiesene IP-Adresse eine erste IP-Adresse in einem virtuellen Netzwerk einschließt, wobei das virtuelle Netzwerk eine Abstraktion eines Anteils des Computernetzwerks ist; und
der ausgewählte Host eine zweite zugewiesene IP-Adresse in demselben virtuellen Netzwerk aufweist.

5. Verfahren (200) nach Anspruch 1, wobei:
die zugewiesene IP-Adresse eine erste IP-Adresse in einem ersten virtuellen Netzwerk einschließt; und
der ausgewählte Host eine zweite zugewiesene IP-Adresse in einem sich von dem ersten virtuellen Netzwerk unterscheidenden zweiten virtuellen Netzwerk aufweist, wobei die erste IP-Adresse dieselbe wie die zweite IP-Adresse ist.

6. Verfahren (200) nach Anspruch 1, wobei das Konfigurieren von Netzwerkeinstellungen für den angefragten Container weiter einschließt:
Abfragen des ausgewählten Hosts nach Parametern von Netzwerkoperationen auf dem ausgewählten Host;
Empfangen einer Antwort auf die Abfrage nach aktuellen Parametern einer Netzwerkoperation von dem ausgewählten Host, wobei die Antwort die Parameter von Netzwerkoperationen auf dem ausgewählten Host enthält; und
Bestimmen einer softwaredefinierten Netzwerkrichtlinie als einen Teil der Netzwerkeinstellungen für den angefragten Container basierend auf den empfangenen Parametern von Netzwerkoperationen auf dem ausgewählten Host in der empfangenen Antwort, wobei die softwaredefinierte Netzwerkrichtlinie Einstellungen für Netzwerkroutenbestimmung, Lastverteilung und/oder andere Parameter spezifiziert.

7. Verfahren (200) nach Anspruch 6, wobei die softwaredefinierte Netzwerkrichtlinie eine Information bezüglich Einstellungen für Netzwerkroutenbestimmung und Lastverteilung für den angefragten Container einschließt.

8. Verfahren (200) nach Anspruch 1, wobei:
der Container ein erster Container ist;
der Host ein erster Host ist; und
das Verfahren weiter ein Weiterleiten einer Nachricht von einem zweiten Container oder einer virtuellen Maschine zu dem ersten Container basierend auf der zugewiesenen IP-Adresse des ersten Containers einschließt, wobei sich der zweite Container oder die virtuelle Maschine auf einem sich von dem ersten Host unterscheidenden zweiten Host befindet.

9. Verfahren (200) nach Anspruch 6, wobei:
der Container ein erster Container ist;
der Container-Host eine erste virtuelle Maschine einschließt; und
das Verfahren weiter ein Weiterleiten einer Nachricht von einem zweiten Container zu dem ersten Container basierend auf der zugewiesenen IP-Adresse des ersten Containers einschließt, wobei sich der zweite Container auf einer sich von der ersten virtuellen Maschine unterscheidenden zweiten virtuellen Maschine befindet.

10. Rechenvorrichtung in einem Rechensystem, das eine Vielzahl von Hosts aufweist, die durch ein Computernetzwerk miteinander verbunden sind, wobei die Rechenvorrichtung einen Prozessor und einen Speicher mit von dem Prozessor ausführbaren Anweisungen umfasst, um zu bewirken, dass der Prozessor einen Prozess nach einem der Ansprüche 1 bis 9 durchführt.

## Revendications

1. Procédé (200) effectué par un dispositif informatique (106) dans un système informatique présentant une pluralité d'hôtes (144) interconnectés par un réseau informatique, comprenant :
la réception (202) d'une demande pour instancier un conteneur d'un utilisateur, le conteneur incluant un progiciel présentant une application logicielle dans un système de fichiers suffisamment complet pour exécuter l'application dans un système d'exploitation par un processeur ;
en réponse à la demande reçue, la sélection (204) d'un des hôtes dans le système informatique en tant qu'un hôte de conteneur pour instancier le conteneur demandé ;
en fonction de la sélection de l'hôte, l'interrogation (212) de l'hôte sélectionné concernant des paramètres d'exploitation réseau actuels sur l'hôte sélectionné ;
en fonction des paramètres actuels ayant fait l'objet d'une interrogation, la configuration des réglages réseau pour le conteneur demandé à instancier sur l'hôte sélectionné dans le système informatique, les réglages réseau incluant une adresse IP assignée en fonction de laquelle le conteneur est accessible de l'extérieur de l'hôte sélectionné ; et
la transmission d'une instruction à l'hôte sélectionné pour instancier (208) le conteneur demandé en fonction des réglages réseau configurés, le conteneur instancié étant adressable par réseau de l'extérieur de l'hôte sélectionné de conteneur.

2. Procédé (200) selon la revendication 1 dans lequel la sélection d'un des hôtes dans le système informatique inclut la sélection d'un serveur physique dans le système informatique en tant que l'hôte de conteneur.

3. Procédé (200) selon la revendication 1 dans lequel un des hôtes dans le système informatique inclut la sélection d'une machine virtuelle hébergée sur un serveur physique dans le système informatique en tant que l'hôte de conteneur.

4. Procédé (200) selon la revendication 1 dans lequel :
l'adresse IP assignée inclut une première adresse IP dans un réseau virtuel, dans lequel le réseau virtuel est une abstraction d'une portion du réseau informatique ; et
l'hôte sélectionné présente une seconde adresse IP assignée dans le même réseau virtuel.

5. Procédé (200) selon la revendication 1 dans lequel :
l'adresse IP assignée inclut une première adresse IP dans un premier réseau virtuel ; et
l'hôte sélectionné présente une seconde adresse IP assignée dans un second réseau virtuel différent du premier réseau virtuel, la première adresse IP est la même que la seconde adresse IP.

6. Procédé (200) selon la revendication 1 dans lequel la configuration de réglages réseau pour le conteneur demandé inclut en outre :
l'interrogation de l'hôte sélectionné concernant des paramètres d'exploitations réseau sur l'hôte sélectionné ;
la réception d'une réponse à l'interrogation concernant des paramètres d'exploitation réseau actuels de l'hôte sélectionné, la réponse contenant les paramètres d'exploitations réseau sur l'hôte sélectionné ; et
la détermination d'une politique réseau définie par un logiciel en tant qu'une partie des réglages réseau pour le conteneur demandé en fonction des paramètres reçus des exploitations réseau sur l'hôte sélectionné dans la réponse reçue, dans lequel la politique réseau définie par un logiciel spécifie des réglages pour détermination d'itinéraire réseau, équilibrage des charges, et/ou autres paramètres.

7. Procédé (200) selon la revendication 6 dans lequel le logiciel définit une politique réseau incluant des informations concernant des réglages pour détermination d'itinéraire réseau et équilibrage de charges pour le conteneur demandé.

8. Procédé (200) selon la revendication 1 dans lequel :
le conteneur est un premier conteneur ;
l'hôte est un premier hôte ; et
le procédé inclut en outre le routage d'un message d'un second conteneur ou d'une machine virtuelle au premier conteneur en fonction de l'adresse IP assignée du premier conteneur, du second conteneur ou de la machine virtuelle résidant sur un second hôte différent du premier hôte.

9. Procédé (200) selon la revendication 6 dans lequel :
le conteneur est un premier conteneur ;
l'hôte de conteneur inclut une première machine virtuelle ; et
le procédé inclut en outre le routage d'un message d'un second conteneur vers le premier conteneur en fonction de l'adresse IP assignée du premier conteneur, du second conteneur résidant sur une seconde machine virtuelle différente de la première machine virtuelle.

10. Dispositif informatique dans un système informatique présentant une pluralité d'hôtes interconnectés par un réseau informatique, le dispositif informatique comprenant un processeur et une mémoire présentant des instructions exécutables par le processeur pour amener le processeur à réaliser un processus selon l'une quelconque des revendications 1-9.
